# EUROPÄISCHE PATENTSCHRIFT

(11) **EP 3 334 559 B1**
(45) Veröffentlichungstag und Bekanntmachung des Hinweises auf die Patenterteilung: **17.08.2022**
(21) Anmeldenummer: 16744406.6
(22) Anmeldetag: 27.07.2016
(51) Int. Cl.: B23Q 39/02, B23Q 1/48, B23Q 39/00

(54) **WERKZEUGMASCHINE**
MACHINE TOOL
MACHINE-OUTIL

(30) Priorität: 14.08.2015 DE 102015113417; 08.01.2016 DE 102016100248
(43) Veröffentlichungstag der Anmeldung: 20.06.2018
(73) Patentinhaber: Alfing Kessler Sondermaschinen GmbH, 73433 Aalen (DE)
(72) Erfinder: KOCH, Thomas, 73230 Kirchheim (DE); BURKHARDT, Rainer, 73433 Aalen (DE); FEIFEL, Johannes, 73433 Aalen (DE); GÖGGERLE, Markus, 73574 Tannhausen (DE); STAVE, Hinrich, 72622 Nürtingen (DE); KRIEGER, Manfred, 73574 Iggingen (DE)
(74) Vertreter: Patentanwälte Bregenzer und Reule Partnerschaftsgesellschaft mbB
(86) Internationale Anmeldenummer: PCT/EP2016/067936
(87) Internationale Veröffentlichungsnummer: WO 2017/029091

(56) Entgegenhaltungen:
- EP-A1- 1 882 544
- EP-A1- 3 159 102
- EP-A1- 3 159 102
- WO-A1-98/57777
- WO-A1-2005/110674
- DE-A1- 10 223 538
- DE-A1- 19 725 630
- DE-A1- 19 725 630
- DE-A1- 19 746 494
- DE-A1- 19 746 494
- DE-A1-102006 026 185
- DE-A1-102006 026 185
- DE-A1-102006 026 185
- GB-A- 2 271 947
- GB-A- 2 271 947
- JP-A- 2004 299 040
- JP-A- 2004 299 040
- JP-A- 2004 299 040
- US-A1- 2013 210 594

## Beschreibung

Die Erfindung betrifft eine Werkzeugmaschine mit einem Werkstückträger und mit einem Werkzeugschlitten gemäß dem Oberbegriff des Anspruchs 1.

Eine derartige Werkzeugmaschine ist beispielsweise in DE 10 2006 026 185 A1 erläutert.

JP 2004 299040 A betrifft eine Werkzeugmaschine mit einem Werkzeugmagazin. Werkzeugmaschinen, bei denen an einem Werkzeugschlitten ein Werkzeugrevolver mit mehreren Bearbeitungswerkzeugen angeordnet sind, ermöglichen es, dass das jeweils in der Bearbeitungsposition befindliche Bearbeitungswerkzeug anhand des Werkzeugschlittens relativ zu dem Werkstück, also beispielsweise zu dem Werkstück hin und von diesem weg, verstellt wird. Das Bearbeitungswerkzeug ist beispielsweise ein Bohrer, Fräser oder dergleichen. Weiterhin werden die Bearbeitungswerkzeuge anhand des Werkzeugschlittens nicht nur zu dem Werkstück hin und von diesem weg entlang der Bearbeitungsachse verfahren, sondern auch in den Querrichtungen, nämlich in einer Y-Richtung und einer X-Richtung. Ausgehend davon ist es die Aufgabe der vorliegenden Erfindung, eine verbesserte Werkzeugmaschine bereitzustellen.

Zur Lösung der Aufgabe ist eine Werkzeugmaschine gemäß der technischen Lehre des Anspruchs 1 vorgesehen.

Es ist dabei ein Grundgedanke, dass der Werkstückträger einen Bewegungsfreiheitsgrad darstellt, entlang dem die Werkstücke relativ zum jeweils in Bearbeitungsposition befindlichen Bearbeitungswerkzeug verstellbar sind. Dadurch kann der Werkzeugschlitten relativ einfach aufgebaut sein, d.h. beispielsweise nur entlang der Bearbeitungsachse linear verstellbar sein. Weiterhin kann ein derartiger Werkzeugschlitten eine hohe Steifigkeit bereitstellen, ermöglicht also eine präzise Werkstückbearbeitung. Der Werkzeugschlitten ist niedrig und steht nicht weit vor das Maschinenbett oder die Maschinenbasis vor. Somit ist ein Wechsel der Bearbeitungswerkzeuge an den Werkzeugrevolvern besonders einfach.

Der Werkzeugschlitten kann aufgrund des sozusagen auf den Werkstückträger ausgelagerten Bewegungsfreiheitsgrades eine geringe Masse aufweisen, so dass er eine geringe Trägheit hat und somit eine schnelle Verstellbarkeit ermöglicht.

Eine Ausführungsform der Erfindung kann vorsehen, dass der Werkzeugschlitten ausschließlich entlang einer einzigen Bearbeitungsachse, die man auch als Z-Achse bezeichnen kann, relativ zu dem Werkstückträger beweglich gelagert ist.

Eine bevorzugte Ausführungsform sieht jedoch einen weiteren Bewegungsfreiheitsgrad des Werkzeugschlittens vor, nämlich dass der Werkzeugschlitten an einer zweiten Linearführung quer, insbesondere rechtwinkelig, zu der Bearbeitungsachse entlang einer Werkzeug-Stellachse beweglich gelagert ist. Somit kann der Werkzeugrevolver und letztlich damit das Bearbeitungswerkzeug entlang zweier zueinander winkeliger Achsen relativ zu dem zu bearbeitenden mindestens einen Werkstück bewegt werden.

Die Bearbeitungsachse und die Werkzeug-Stellachse sind vorzugsweise horizontale Achsen. Die Stellachse der Werkstückträger-Linearführung ist zweckmäßigerweise eine vertikale Achse. Die Stellachse der Werkstückträger-Linearführung, die Bearbeitungsachse und die Werkzeug-Stellachse sind vorzugsweise zueinander rechtwinkelig oder orthogonal.

Mithin ist es also eine vorteilhafte Ausführungsform der Erfindung, wenn die Bewegungsachsen des Werkzeugschlittens zur Positionierung des jeweils in Bearbeitungsposition stehenden Bearbeitungswerkzeugs horizontale Achsen sind. In Bezug auf eine Positionierung oder Verstellung der Werkstücke in vertikaler Richtung oder Höhenrichtung ist sozusagen der Werkstückträger aktiv und ermöglicht die entsprechende Verstellbarkeit der Werkstücke relativ zu dem jeweils aktiven Bearbeitungswerkzeug. Somit wird also ein Teil der Positionierarbeit vom Werkzeugschlitten geleistet, der andere Teil vom Werkstückträger.

Der Werkzeugschlitten ist beispielsweise als so genannter Kreuzschlitten ausgestaltet.

Jedem Bewegungsfreiheitsgrad des Werkzeugschlittens ist zweckmäßigerweise ein Schlittenantrieb zugeordnet, beispielsweise ein Spindeltrieb, ein Linear-Direktantrieb oder dergleichen.

An dem Werkzeugschlitten können mehrere Werkzeugrevolver vorgesehen sein. Beispielsweise können an dem Werkzeugschlitten zwei Werkzeugrevolver oder auch mehr Werkzeugrevolver vorgesehen sein.

An einem Grundkörper oder Basiskörper des Werkzeugschlittens sind vorzugsweise mindestens zwei Werkzeugrevolver angeordnet.

Wenn an dem Werkzeugschlitten mehrere Werkzeugrevolver vorgesehen sind, ist vorteilhaft vorgesehen, dass jeder Werkzeugrevolver einen um eine Revolverachse drehbaren Werkzeugträger zur Positionierung jeweils eines Bearbeitungswerkzeugs in eine Bearbeitungsposition und einen Werkzeugantrieb zum Dreh-Antreiben des in der Bearbeitungsposition befindlichen Bearbeitungswerkzeugs aufweist. Vorzugsweise hat jeder Werkzeugrevolver einen individuellen Werkzeugantrieb. Somit ist bei jedem Werkzeugrevolver jeweils ein Bearbeitungswerkzeug separat von den Bearbeitungswerkzeugen der anderen Werkzeugrevolver antreibbar.

Eine bevorzugte und in der Zeichnung dargestellte Ausführungsform der Erfindung sieht vor, dass die Werkzeugmaschine zwei Werkzeugrevolver aufweist, deren Revolverachsen winkelig zueinander stehen. Beispielsweise verlaufen die Revolverachsen etwa in einem Winkel von 90° zueinander. Die Werkzeugträger der Werkzeugrevolver können somit beispielsweise frei drehen, ohne dass an ihnen angeordnete Bearbeitungswerkzeuge mit Bearbeitungswerkzeugen des anderen Werkzeugträgers oder Werkzeugrevolvers kollidieren.

Die in der Bearbeitungsposition stehenden Bearbeitungswerkzeuge der mindestens zwei Werkzeugrevolver sind zweckmäßigerweise in einer Reihenrichtung nebeneinander angeordnet. Die Reihenrichtung verläuft vorteilhaft entlang einer horizontalen Achse.

An dem Werkstückträger sind den Bearbeitungswerkzeugen zugeordnete Werkstückhalterungen oder mindestens eine einem Bearbeitungswerkzeug zugeordnete Werkstückhalterung vorgesehen. Beispielsweise sind an dem Werkstückträger mindestens zwei in der Reihenrichtung nebeneinander angeordnete Werkstückhalterungen zum Halten von Werkstücken vorhanden. Die Reihenrichtung verläuft vorteilhaft entlang einer horizontalen Achse.

Der Werkstückträger hat zweckmäßigerweise eine balkenartige Gestalt. Beispielsweise umfasst der Werkstückträger einen Werkstückbalken, dessen Längsachse quer zu der Bearbeitungsachse des Werkzeugschlittens verläuft. Beispielsweise verläuft die Längsachse quer, insbesondere rechtwinkelig, zu der erläuterten Z-Achse. Bevorzugt ist vorgesehen, dass die Längsachse des Werkstückbalkens in X-Richtung oder parallel zu der X-Achse verläuft.

Eine zweckmäßige und besonders stabile Anordnung sieht vor, dass der Werkstückträger an mehreren Bereichen abgestützt ist.

Beispielsweise ist es vorteilhaft, wenn der Werkstückträger an seinen jeweiligen Längsendbereichen jeweils an einem Schlitten der Werkstückträger-Linearführung gehalten ist. Beispielsweise ist der Werkstückträger zwischen Führungstürmen oder Führungsständern gehalten, an denen jeweils eine Führungsanordnung der Werkstückträger-Linearführung angeordnet ist. An den Führungsanordnungen sind jeweils Schlitten beweglich gelagert, beispielsweise anhand von Gleitelementen, Rollen oder dergleichen.

Die Werkzeugmaschine kann eine Werkstückwechseleinrichtung aufweisen.

Der Werkstückträger hat zweckmäßigerweise mindestens zwei voneinander separate Werkstückhaltebereiche, an denen jeweils mindestens ein Werkstückhalter zum Halten eines Werkstücks angeordnet ist. Der Werkstückträger ist zweckmäßigerweise derart beweglich, beispielsweise linear oder drehbar beweglich, dass jeweils ein Werkstückhaltebereich des jeweils aktiven Bearbeitungswerkzeugs bewegbar ist, während ein anderer Werkstückhaltebereich in einem Werkstückwechselbereich angeordnet ist, wo ein Werkstückwechsel durch beispielsweise einen Handlingroboter oder eine sonstige Werkstückwechseleinrichtung stattfinden kann.

Es ist z.B. möglich, dass die Werkstückhaltebereiche in Bezug auf die Stellachse der Werkstückträger-Linearführung übereinander angeordnet sind, so das durch eine Bewegung des Werkstückträgers entlang der Stellachse abwechselnd der eine Werkstückhaltebereich in den Bearbeitungsbereich bewegbar ist, während der andere Werkstückhaltebereich für einen Werkstückwechsel bereitsteht, und umgekehrt.

Vorteilhaft sind die Werkstückhaltebereiche an zueinander winkeligen oder einander entgegengesetzten Bereichen des Werkstückträgers angeordnet, wobei durch eine Drehung des Werkstückträgers die Werkstückhaltebereiche zum Bearbeitungsbereich und zum Werkstückwechselbereich bewegbar sind.

Es versteht sich, dass an einem Außenumfang des Werkstückträgers mehrere Werkstückhaltebereiche vorgesehen sein können, die zueinander winkelig sind. Beispielsweise kann der Werkstückträger im Querschnitt dreieckförmig oder rechteckförmige sein, sodass zueinander winkelige Werkstückhaltebereiche möglich sind.

Erfindungsgemäß ist vorgesehen, dass der Werkstückträger, vorteilhaft an der Werkstückträger-Linearführung, anhand einer Drehlageranordnung um eine Positionier-Schwenkachse schwenkbar gelagert ist.

Beispielsweise ist die Drehlageranordnung an einem oder mehreren Schlitten vorgesehen, die an der Werkstückträger-Linearführung entlang der insbesondere vertikalen Stellachse verstellbar sind.

Es ist aber auch möglich, dass die Drehlageranordnung zwischen beispielsweise einem Ständer und der Werkstückträger-Linearführung vorgesehen ist. Der Werkstückträger kann an Schlitten, die an der Werkstückträger-Linearführung verschieblich gelagert sind, unverdrehbar sein, während die Linearführung relativ zu dem Ständer oder sonstigen bezüglich der Maschinenbasis der Werkzeugmaschine ortsfesten Bauteil anhand der Drehlageranordnung drehbar ist.

Die Drehbarkeit um die Positionier-Schwenkachse ermöglicht es, dass mindestens zwei voneinander verschiedene Werkstückhaltebereiche des Werkstückträgers abwechselnd in einem Bearbeitungsbereich, beispielsweise frontal vor das mindestens eine Bearbeitungswerkzeug oder vor den Werkzeugschlitten, geschwenkt werden können. Somit ist beispielsweise ein Werkstückhaltebereich in den Bearbeitungsbereich verstellt, während ein anderer Werkstückhaltebereich davon weg in einen Werkstückwechselbereich verstellt ist, so dass dort ein Werkstückwechsel möglich ist. Beispielsweise ist im Werkstückwechselbereich ein Handlingroboter oder eine sonstige Werkstückwechseleinrichtung vorgesehen.

Prinzipiell möglich ist es, dass die Positionier-Schwenkachse beispielsweise vertikal verläuft. Bevorzugt ist jedoch eine Anordnung derart, dass die Positionier-Schwenkachse quer, zum Beispiel rechtwinkelig quer, zu der Bearbeitungsachse oder Z-Achse des Werkzeugschlittens verläuft. Die Positionier-Schwenkachse verläuft vorteilhaft parallel zur X-Achse.

Die Positionier-Schwenkachse entspricht beispielsweise der Längsachse des Werkstückbalkens.

Eine zweckmäßige Ausgestaltung der Erfindung sieht vor, dass die Drehlageranordnung den Werkstückträger an seinen jeweiligen Längsendbereichen mit jeweils einem Drehlager drehbar lagert. Somit ist der Werkstückträger an einander entgegengesetzten Endbereichen abgestützt und drehbar gelagert. Die Drehlager sind beispielsweise an den bereits erwähnten Schlitten der Werkstückträger-Linearführung vorgesehen. Alternativ ist es möglich, dass der Werkstückträger beispielsweise in der Art eines Armes vor ein einziges Drehlager vorsteht.

Die Revolverachse des Werkzeugrevolvers verläuft erfindungsgemäß schräg zu der Bearbeitungsachse oder Z-Achse des Werkzeugschlittens. Bevorzugt ist eine Konfiguration mit einem Winkel von etwa 45° der Revolverachse zu der Bearbeitungsachse.

Die Revolverachse verläuft zweckmäßigerweise horizontal. Es ist aber auch möglich, dass die Revolverachse vertikal verläuft. Weiterhin ist es möglich, dass die Revolverachse in einem Winkelbereich zwischen einer vertikalen Achse und einer horizontalen Achse verläuft.

Die nachfolgenden Ausführungen betreffen eine bevorzugte Ausführungsform der obigen Erfindung. Vorteilhaft ist vorgesehen, mindestens zwei Werkzeugrevolver mit um jeweils eine Revolverachse drehbaren Werkzeugträgern aufweist, wobei die in der jeweiligen Bearbeitungsposition befindlichen Bearbeitungswerkzeuge der Werkzeugrevolver in einer Reihenachse nebeneinander angeordnet sind, wobei die Revolverachsen an einander entgegengesetzten Seiten der Reihenachse angeordnet sind. Bei dieser Anordnung können die Bewegungsbahnen, die die Bearbeitungswerkzeuge bei einer Drehung um die Revolverachse durchlaufen, näher beieinander sein. Ein Außenabstand der Bewegungsbahnen kann dadurch kleiner ausgestaltet sein.

Zweckmäßigerweise ist dabei vorgesehen, dass die Bearbeitungswerkzeuge bei einer Drehung um die jeweilige Revolverachse Bewegungsbahnen durchlaufen, die einen Abstand zueinander haben. Somit ist eine freie Drehbarkeit der Werkzeugträger und der daran angeordneten Bearbeitungswerkzeuge möglich.

Eine Umhüllende um die Bewegungsbahn der Bearbeitungswerkzeuge des einen Werkzeugrevolvers und eine Umhüllende um die Bewegungsbahn der Bearbeitungswerkzeuge des anderen Werkzeugrevolvers tangieren sich zweckmäßigerweise nicht.

Es ist aber auch möglich, dass sich die Bewegungsbahnen oder die erläuterten Umhüllenden um die Bewegungsbahnen zumindest teilweise überlappen. Weiterhin ist es eine vorteilhafte Ausgestaltung der obigen Ausführungsformen wenn die Werkzeugmaschine mindestens zwei Werkzeugrevolver mit um jeweils eine Revolverachse drehbaren Werkzeugträgern aufweist, wobei die in der jeweiligen Bearbeitungsposition befindlichen Bearbeitungswerkzeuge der Werkzeugrevolver in einer Reihenachse nebeneinander angeordnet sind, wobei mindestens ein außerhalb der Bearbeitungspositionen befindliches Bearbeitungswerkzeug in einen Zwischenraum zwischen die in der Bearbeitungspositionen befindlichen Bearbeitungswerkzeuge bewegbar ist. Der Zwischenraum zwischen den Bearbeitungspositionen ist also ein Aufnahmeraum für nicht genutzte Bearbeitungswerkzeuge, was insgesamt eine platzsparende Konfiguration ermöglicht.

Zweckmäßigerweise ist vorgesehen, dass die Werkzeugmaschine eine Steuereinrichtung, beispielsweise eine Computersteuereinrichtung und/oder eine mechanische Steuereinrichtung, zur Steuerung der Drehbewegung der Werkzeugrevolver aufweist derart, dass die Bearbeitungswerkzeuge des einen Werkzeugrevolvers in Zwischenräume zwischen Bearbeitungswerkzeuge des anderen Werkzeugrevolvers zahnartig eingreifen. Die Bearbeitungswerkzeuge des einen Werkzeugrevolvers nutzen sozusagen die Abstände zwischen Bearbeitungswerkzeugen des anderen Werkzeugrevolvers. Vorteilhaft ist selbstverständlich vorgesehen, dass sich die Bearbeitungswerkzeuge der benachbarten Werkzeugrevolver nicht berühren, sondern berührungslos ineinander eingreifend bewegbar sind. Eine derartige Steuereinrichtung ermöglicht es, dass die Werkzeugrevolver platzsparend besonders nahe beieinander angeordnet sind. Die Steuereinrichtung steuert beispielsweise Positionierantrieben der Werkzeugrevolver an. Durch eine entsprechende Verzahnung der Werkzeugträger der Werkzeugrevolver oder mechanische Taktsteuerung der Werkzeugträger ist aber ein synchroner Vorschub der Werkzeugträger bzw. eine synchrone Drehung der Werkzeugträger benachbarter Werkzeugrevolvers auch realisierbar.

An dem Werkzeugträger sind beispielsweise mindestens zwei Werkzeugaufnahmen, vorzugsweise drei oder vier oder weitere Werkzeugaufnahmen, vorgesehen. Ein Werkzeugantrieb eines Werkzeugrevolvers kann zum Dreh-Antreiben nur jeweils eines in Bearbeitungsposition befindlichen Bearbeitungswerkzeugs vorgesehen sein. Es ist aber auch möglich, dass ein Werkzeugträger mit mindestens zwei simultan mit dem Werkzeugantrieb drehgekoppelten oder in Drehkoppelung bringbaren Werkzeugaufnahmen vorgesehen ist. Somit können beispielsweise zwei oder weitere Bearbeitungswerkzeuge gleichzeitig durch den Werkzeugantrieb oder die Werkzeug-Spindel angetrieben werden. Der simultane Antrieb ist beispielweise möglich, wenn die zwei oder weiteren Bearbeitungswerkzeugen oder Werkzeugaufnahmen in der Bearbeitungsposition stehen. Zur Drehkoppelung ist beispielsweise ein Verteilergetriebe vorgesehen, welches einerseits mit dem Werkzeugantrieb koppelbar ist, insbesondere in der Bearbeitungsposition, und welches mindestens zwei Werkzeugaufnahmen oder daran angeordnete Werkzeuge antreiben kann. Es versteht sich, dass nicht jede dieser drehgekoppelten Werkzeugaufnahmen immer mit einem Bearbeitungswerkzeug bestückt sein muss, sondern dass, z.B. zumindest für bestimmte Arbeitstakte oder Arbeitsabschnitte, mindestens eine Werkzeugaufnahme ohne Bearbeitungswerkzeug sein kann. Die zwei oder weiteren Werkzeugaufnahmen können also gleichzeitig in der Bearbeitungsposition stehen.

Nachfolgend werden Ausführungsbeispiele der Erfindung anhand der Zeichnung erläutert. Es zeigen:
- Figur 1: eine perspektivische Schrägansicht von oben auf eine Werkzeugmaschine,
- Figur 2: eine Frontalansicht und
- Figur 3: eine Seitenansicht der Werkzeugmaschine gemäß Figur 1,
- Figur 4: eine Frontalansicht auf Werkzeugrevolver der Werkzeugmaschine gemäß der vorstehenden Figuren,
- Figur 5: die Werkzeugrevolver gemäß Figur 4 von oben,
- Figur 6: eine erste alternative geometrische Konfiguration von Werkzeugrevolvern für die Werkzeugmaschine gemäß vorstehender Figuren in Frontalansicht,
- Figur 7: eine zweite alternative geometrische Konfiguration von Werkzeugrevolvern für die Werkzeugmaschine gemäß vorstehender Figuren in Frontalansicht,
- Figur 8: eine dritte alternative geometrische Konfiguration von Werkzeugrevolvern für die Werkzeugmaschine gemäß vorstehender Figuren in Frontalansicht,
- Figur 9: eine vierte alternative geometrische Konfiguration von Werkzeugrevolvern für die Werkzeugmaschine gemäß vorstehender Figuren in Frontalansicht, und
- Figur 10: die Werkzeugrevolver gemäß Figur 9 von oben, entsprechend der Ansicht von Figur 5.

Eine Werkzeugmaschine 10 weist eine Maschinenbasis 11 auf. Die Maschinenbasis 11 umfasst einen Werkzeugabschnitt 12 und einen Werkstückabschnitt 13, die beispielsweise winkelig zueinander angeordnet sind. In Draufsicht ist die Maschinenbasis 11, die man auch als Maschinenbett bezeichnen könnte, beispielsweise T-förmig, was aber nicht einschränkend verstanden werden soll. Der Werkzeugabschnitt 12 und der Werkstückabschnitt 13 können einstückig sein oder fest miteinander verbunden sein.

An dem Werkzeugabschnitt 12 ist ein Werkzeugschlitten 20 zumindest entlang einer Bearbeitungsachse Z, die nachfolgend auch als Z-Achse bezeichnet wird, linear gelagert. Hierfür ist eine Linearführung 21 vorgesehen, die beispielsweise auf einer Oberseite des Werkzeugabschnitts 12 vorgesehen ist. Die Linearführung 21, die man auch als Z-Führung bezeichnen könnte, umfasst beispielsweise Führungsschienen 22, an denen der Werkzeugschlitten 20 beweglich gelagert ist.

Beispielsweise ist ein Schlittenträger 26, der eine Schlittenbasis 27 des Werkzeugschlittens 20 trägt, an den Führungsschienen 22 beweglich gelagert, beispielsweise mit Rollen, Gleitstücken oder dergleichen.

Ein Schlittenantrieb 23 dient zum Antreiben des Werkzeugschlittens 20 entlang der Z-Achse. Der Schlittenantrieb 23 umfasst beispielsweise einen Antriebsmotor 24 sowie einen Spindeltrieb 25, der mit dem Werkzeugschlitten 20, beispielsweise dem Schlittenträger 26, gekoppelt ist.

Eine Ausführungsform der Erfindung kann vorsehen, dass der Werkzeugschlitten 20 nur entlang der Z-Achse beweglich gelagert ist. In diesem Falle wäre beispielsweise die Schlittenbasis 27 mit dem Schlittenträger 26 einstückig oder mit dem Schlittenträger 26 fest verbunden.

Vorliegend ist jedoch ein weiterer Bewegungsfreiheitsgrad vorhanden, nämlich in einer zu der Bearbeitungsachse Z winkelig, beispielsweise rechtwinkelig, verlaufenden Werkzeug-Stellachse X. An dem Schlittenträger 26 ist eine weitere Linearführung 28 mit beispielsweise Schienen 29 vorgesehen, an der die Schlittenbasis 27 entlang der Werkzeug-Stellachse X beweglich gelagert ist. Beispielsweise sind Gleitflächen, Rollen oder dergleichen andere Führungselemente 30 an den Schienen 29 beweglich gelagert. Ein Schlittenantrieb 30, der nur schematisch dargestellt ist, treibt die Schlittenbasis 27 relativ zum Schlittenträger 26 entlang der Werkzeug-Stellachse X an. Der Werkzeugschlitten 20 ist beispielsweise ein sogenannter Kreuzschlitten.

An einer Frontseite 31 des Werkzeugschlittens 20 sind Werkzeugrevolver 40 und 140 angeordnet. Die Werkzeugrevolver 40, 140 umfassen jeweils einen Werkzeugträger 41, der um eine Revolverachse 42, 142, drehbar bezüglich des Werkzeugschlittens 20 gelagert ist. Die Werkzeugträger 41 könnten nun unmittelbar an der Schlittenbasis 27 angeordnet sein. Vorliegend sind jedoch Revolverträger 46 vorgesehen, die an der Schlittenbasis 27 befestigt sind. An der Schlittenbasis 27, beispielsweise am oder im Revolverträger 46, sind Werkzeugantriebe 43 vorgesehen, die zum Dreh-Antreiben jeweils eines Bearbeitungswerkzeugs 44 ausgestaltet sind.

An den Werkzeugträgern 41 sind ringförmig mehrere Bearbeitungswerkzeuge 44 angeordnet, die unterschiedlich ausgestaltet sein können, beispielsweise als Bearbeitungswerkzeuge 44A, 44B. Die Bearbeitungswerkzeuge 44 sind beispielsweise an Werkzeugaufnahmen 47 gehalten. Die Werkzeugaufnahmen 47 stehen beispielsweise kegelförmig nach radial schräg außen vor die Werkzeugträger 41 vor.

Anhand von Positionierantrieben 45 (schematisch dargestellt), können die Werkzeugträger 41 um die Revolverachsen 42, 142 verschwenkt werden, sodass ein jeweils gewünschtes Bearbeitungswerkzeug 44 in eine Bearbeitungsposition O zum Bearbeiten von Werkstücken W verstellt ist, was nachfolgend noch deutlich wird. Die Werkzeugantriebe 43 werden mit dem aktiv in der Bearbeitungsposition O stehenden Bearbeitungswerkzeuge 44 gekuppelt, wofür in an sich bekannter Weise eine Kupplung vorgesehen ist.

Frontal vor dem Werkzeugschlitten 20 ist ein Werkstückträger 60 angeordnet. Der Werkstückträger 60 umfasst beispielsweise einen Werkstückbalken 61, der quer vor dem Werkzeugschlitten 20 verläuft. An dem Werkstückträger 60 sind mehrere Werkstückhalterungen 62 zum Halten von Werkstücken W, beispielsweise Pleueln, in einer Reihenrichtung 63 nebeneinander angeordnet. Die Reihenrichtung 63 verläuft parallel zu einer Längsachse 64 des Werkstückträgers 60.

Der Werkstückträger 60 ist um eine Positionier-Schwenkachse A, vorliegend seine Längsachse 64, schwenkbar gelagert, sodass an unterschiedlichen Werkstückhaltebereichen 65, z.B. Werkstückhaltebereichen 65A und 65B, gehaltene Werkstücke W jeweils frontal vor den Werkzeugschlitten 20 und somit vor die Bearbeitungswerkzeuge 44 in einen Bearbeitungsbereich 85 zur Bearbeitung schwenkbar sind oder auch von den Bearbeitungswerkzeugen 44 weg, beispielsweise in einen für eine Werkstückwechsel vorgesehenen Werkstückwechselbereich 86. Der Werkstückwechselbereich 86 und der Bearbeitungsbereich 85 sind beispielsweise an einander entgegengesetzten Seiten des Werkstückträgers 60 vorgesehen.

Die Werkstückhaltebereiche 65 sind an Außenumfangsseiten, insbesondere einander entgegengesetzten und/oder zueinander winkeligen, Außenumfangsseiten des Werkstückträgers 60 vorgesehen.

Es versteht sich, dass mehrere Werkstückhaltebereiche eine Option darstellen, d.h. dass auch nur ein einziger Werkstückhaltebereich an einem Werkstückträger vorgesehen sein kann.

Eine Positionierung der an dem Werkstückträger 60 angeordneten Werkstücke W relativ zu den Bearbeitungswerkzeugen 44 wird zumindest teilweise durch den Werkstückträger 60 geleistet. Der Werkstückträger 60 ist an einer Werkstückträger-Linearführung 70 entlang einer vertikalen Stellachse Y linear verstellbar. An dem Werkstückträger 60 angeordnete Werkstücke W können also in Bezug auf die Stellachse Y relativ zu den Bearbeitungswerkzeugen 44 verstellt werden.

Der Werkzeugschlitten 20 positioniert also die Bearbeitungswerkzeuge 44 entlang der horizontalen Achsen, der Bearbeitungsachse Z und der Werkzeug-Stellachse X, während der dritte lineare Bewegungsfreiheitsgrad durch den Werkstückträger 60 und die Werkstückträger-Linearführung 70 geleistet wird.

Die Werkstückträger-Linearführung 70 umfasst an Ständern 71 vorgesehene Führungsschienen 73, an denen Schlitten 72 beweglich gelagert sind, beispielsweise anhand von Rollen, Gleitstücken oder dergleichen. Ständer 71, die man auch als Türme bezeichnen könnte, stehen beispielsweise nach oben vor dem Werkzeugabschnitt zwölf vor und sind an diesem befestigt.

Die Schlitten 72, die beispielsweise an jeweils einem Paar von Führungsschienen 73 beweglich gelagert sind, sind durch Schlittenantrieb 74 antreibbar. Die Schlittenantriebe 74 umfassen beispielsweise jeweils einen Antriebsmotor 75.

Ein jeweiliger Antriebsmotor 75 treibt einen jeweiligen Schlitten 72 über beispielsweise einen Spindeltrieb oder dergleichen an (was in der Zeichnung nicht dargestellt ist). Beispielsweise sind die Antriebsmotoren 75 oben an den Ständern 71 angeordnet, was zu Kühlungszwecken und Montagezwecken vorteilhaft ist.

Zur Drehlagerung um die Positionier-Schwenkachse A ist der Werkstückträger 60 an seinen Längsendbereichen anhand von Drehlagern 77 schwenkbar gelagert. Die Drehlager 77 bilden Bestandteile einer Drehlageranordnung 76. Beispielsweise ist an jedem der Schlitten 72 jeweils eines der Drehlager 77 vorgesehen. Durch die Drehlagerung an seinen Längsendbereichen ist der Werkstückträger 60, also beispielsweise der Werkstückbalken 61, optimal abgestützt, dennoch aber für die Positionierarbeit oder Positionierung der Werkstücke W für eine Bearbeitung durch die Bearbeitungswerkzeuge 44 oder ein Werkstückwechsel beweglich.

Beispielsweise verläuft die Positionier-Schwenkachse A parallel zu der Werkzeug-Stellachse X.

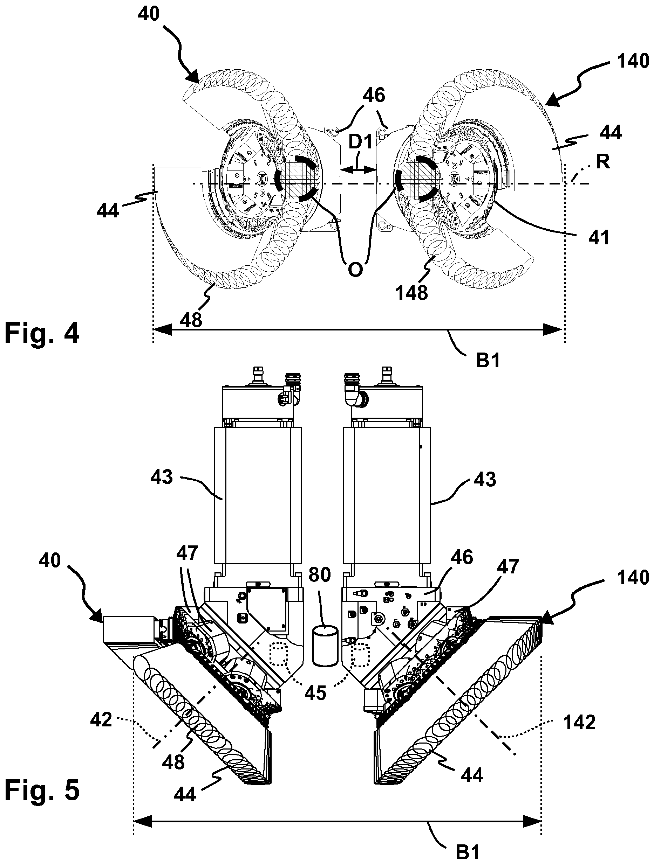

Jeweils eines der Bearbeitungswerkzeuge 44 der Werkzeugrevolver 40, 140 nimmt die Bearbeitungsposition O ein (in Figur 4 eingezeichnet). Die Bearbeitungspositionen O sind in einer Reihenrichtung R nebeneinander angeordnet. Die Reihenrichtung R verläuft horizontal und parallel zur Werkzeug-Stellachse X. Selbstverständlich ist es möglich, dass die Reihenrichtung R winkelig zur Werkzeug-Stellachse X verläuft oder nicht horizontal.

Weil mehrere, vorliegend zwei, Bearbeitungswerkzeuge 44 jeweils in der Bearbeitungspositionen O sind, können gleichzeitig mehrere Werkstücke W, die am Werkstückträger 60 angeordnet sind, bearbeitet werden.

Die Reihenrichtung R entspricht der Reihenrichtung 63 der Werkstückhalterungen 62 am Werkstückträger 60.

Durch Verstellung des Werkzeugschlittens 20 entlang der Werkzeug-Stellachse X können die Bearbeitungswerkzeuge 44 relativ zu den Werkstückhalterungen 62 bewegt werden. Beispielsweise sind vier Werkstückhalterungen 62 vorgesehen, während nur zwei Bearbeitungswerkzeuge 44 jeweils eine Werkstückbearbeitung leisten können. Durch eine Verstellung des Werkzeugschlittens entlang der Werkzeug-Stellachse X können die Bearbeitungswerkzeuge 44 abwechselnd einem ersten Paar von Werkstückhaltern 62 und einem zweiten Paar von Werkstückhaltern 62 gegenüberliegend und somit den jeweils dort angeordneten Werkstücken W gegenüberliegend positioniert werden.

In den Figuren 4-10 sind die Bearbeitungswerkzeuge 44 der Werkzeugrevolver 40, 140 bei einer Drehbewegung der Werkzeugträger 41 um die Revolverachsen 42, 142 dargestellt. Es ergibt sich dabei eine beispielsweise kegelförmige Bewegungsbahn 48, 148 der Bearbeitungswerkzeuge 44.

Man erkennt, dass sich die Bewegungsbahnen 48, 148 bei der Anordnung der Werkzeugrevolver 40, 140 gemäß Figuren 4 und 5 nicht tangieren, d.h. dass eine freie Drehbarkeit der Werkzeugträger 41 um die Revolverachsen 42, 142 möglich ist.

Ein Außenabstand B1 der Bewegungsbahnen 48, 148 der Werkzeugrevolver 40, 140 ist dabei jedoch relativ groß. Mithin hat also die Werkzeugmaschine 10 bezüglich der Werkzeug-Stellachse X oder auch der Längsachse 64 des Werkstückträgers 60 eine große Länge. Dieser Bauraum lässt sich jedoch durch die nachfolgend erläuterten Maßnahmen, die exemplarisch zu verstehen sind, verkleinern.

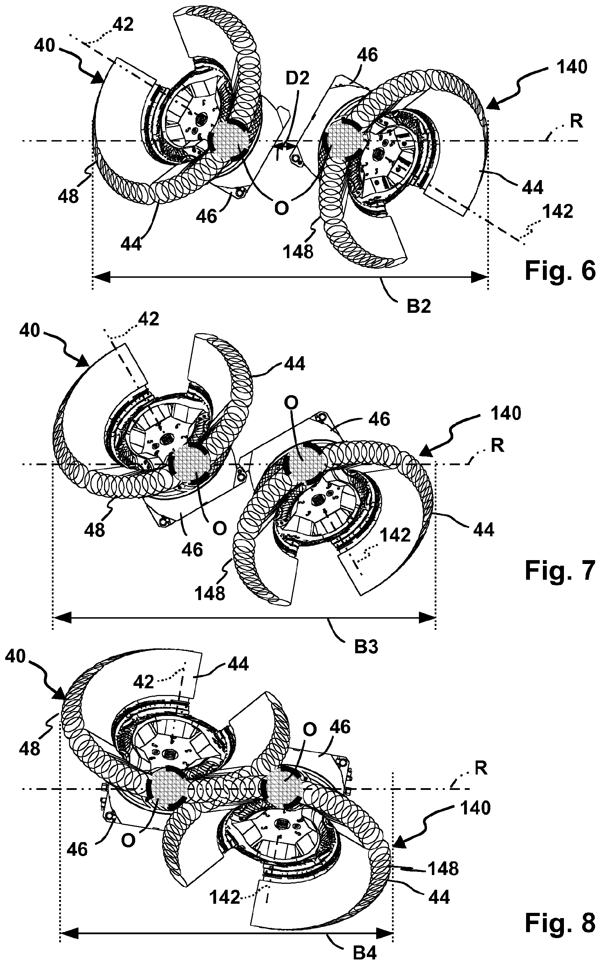

Bei der Anordnung gemäß Figur 6 ist beispielsweise ein Außenabstand B2 der Bewegungsbahnen 48, 148 der Werkzeugrevolver 40, 140 deutlich kleiner als der Außenabstand B1. Dazu ist einerseits ein Abstand D2 zwischen den Revolverträger 46 kleiner als ein Abstand D1 zwischen den Revolverträgern 46 bei der Anordnung gemäß Figuren 4, 5. Zudem sind die Revolverachsen 42, 142 nicht mehr in derselben Ebene bezüglich der Reihenachse R angeordnet, sondern an einander entgegengesetzten Seiten der Reihenachse R oder einer Ebene, die die Reihenachse R aufweist.

Bei der Anordnung gemäß Figur 7 ist ein Abstand zwischen den Werkzeugrevolvern 40, 140 noch kleiner. Der Abstand zwischen den Bearbeitungspositionen O ist jedoch nicht verändert. Allerdings sind die Revolverachsen 42 und 142 noch weiter zu der Reihenachse R oder der die Reihenachse R aufweisenden Ebene beabstandet. Man erkennt, dass sich die Bewegungsbahnen 48, 148 noch nicht tangieren. Der Außenabstand B3 oder die Querbreite beider Bewegungsbahnen 48, 148 ist jedoch kleiner als der Außenabstand B1 oder B2. Die Anordnung ist also relativ schmal, jedoch in Bezug auf die Y-Achse oder Stellachse Y höher.

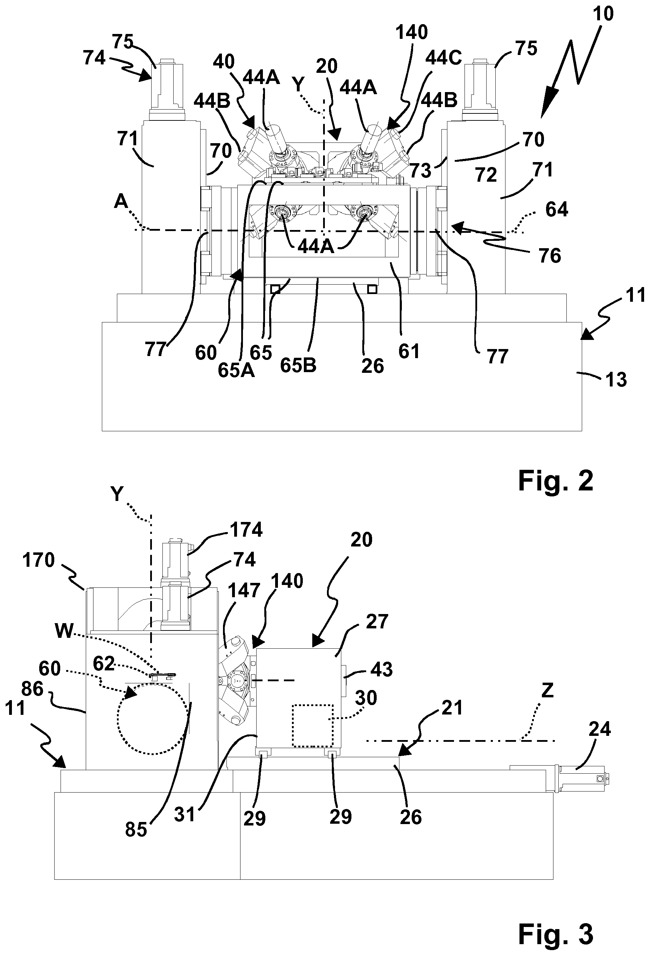

Dieser Nachteil kann aber vorteilhaft dadurch ausgeglichen werden, dass der Werkstückträger 60 entlang der vertikalen Stellachse Y verstellbar ist. In diesem Zusammenhang sei noch auf eine Variante gemäß Figur 3 hingewiesen, wo beispielsweise die Werkstückträger-Linearführung 70 in Bezug auf die Y-Achse verlängert ist, sodass sie eine Werkstückträger-Linearführung 170 darstellt. Beispielsweise können die Werkstückträger-Linearführungen 70, 170 kaskadiert sein. Für die Werkstückträger-Linearführung 170 ist ein weiterer Schlittenantrieb 174 vorgesehen.

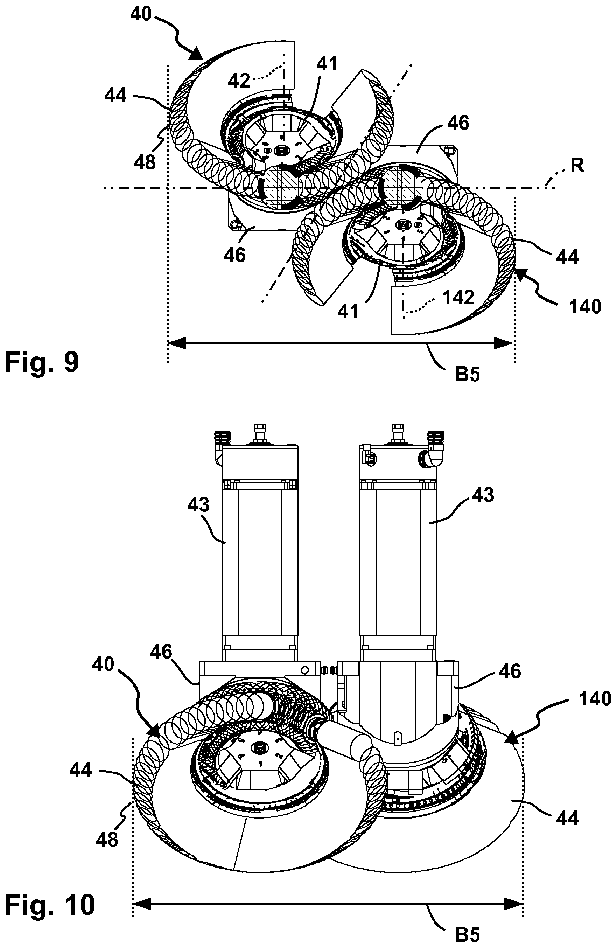

Auch bei der Konfiguration gemäß Figuren 9 und 10 berühren sich die Bewegungsbahnen 48, 148 noch nicht. An gleicher Stelle sei aber erwähnt, dass in Abhängigkeit der Geometrie und Abmessung der jeweils verwendeten Bearbeitungswerkzeuge 44 durchaus sich berührende Bewegungsbahnen 48, 148 auch beim Ausführungsbeispiel gemäß Figuren 9 und 10 möglich sind. Eine Querbreite oder ein Außenabstand B5 der Konfiguration gemäß Figur 9, 10 ist kleiner als eine Querbreite oder ein Außenabstand B1, B2 oder B3.

Eine besonders schmale Anordnung mit kleinem Außenabstand B4 ist in Figur 8 dargestellt. Dort überlappen oder tangieren sich die Bewegungsbahnen 48, 148 der Bearbeitungswerkzeuge 44.

Eine in Figur 5 dargestellte Steuereinrichtung 80 kann jedoch dafür sorgen, dass die Positionierantriebe 45 derart angesteuert werden, dass die Bearbeitungswerkzeuge 44 der benachbarten Werkzeugrevolver 40, 140 zahnartig ineinander eingreifen, d.h. dass ein Bearbeitungswerkzeug 44 des einen Werkzeugrevolvers 40 in einen Abstand zwischen Bearbeitungswerkzeugen 44 des anderen Werkzeugrevolvers 140 eingreift, vorzugsweise berührungslos. Eine entsprechende Taktsteuerung, die diese Funktionalität aufweist, kann auch mechanisch realisiert werden.

Vorzugsweise ist die Steuereinrichtung 80 jedoch eine Computersteuerung, die vorteilhaft zudem auch die übrigen Steuerungsaufgaben der Werkzeugrevolver 40, 140, vorzugsweise auch der gesamten Werkzeugmaschine 10 leistet.

Eine Variante der Erfindung kann vorsehen, dass ein um die Revolverachse drehbarer Werkzeugträger jeweils ein Bearbeitungswerkzeug in die Bearbeitungsposition bringen kann. Beispielsweise sind die Werkzeugaufnahmen am Werkzeugträger jeweils für ein einziges Bearbeitungswerkzeug vorgesehen, das durch den Werkzeugantrieb in der Bearbeitungsposition antreibbar ist.

In der Zeichnung ist aber auch eine Alternative dargestellt, dass nämlich an einem Werkzeugträger 41 beispielsweise über ein Verteilergetriebe 149 jeweils zwei Werkzeugaufnahmen simultan durch den Werkzeugantrieb 43 antreibbar sind, wenn sie in der Bearbeitungsposition O stehen. Man könnte diese Konfiguration auch beispielsweise als Doppelspindelrevolver bezeichnen. Beispielsweise hat jeder der Werkzeugträger 41 zwei sozusagen einfache Werkzeugaufnahmen 47 und jeweils zwei Verteilergetriebe 149 zum simultanen Antreiben zweier Werkzeugaufnahmen 147A und 147B. Diese Zahlangaben sind aber nur exemplarisch zu verstehen, das heißt es könnte beispielsweise auch ein Werkzeugrevolver mit ausschließlich sozusagen singulären Werkzeugaufnahmen 47 vorgesehen sein, von denen jeweils nur eine in der Bearbeitungsposition O stehen kann. Ferner kann nur ein "Doppelspindelrevolver" oder können mehr als zwei "Doppelspindelrevolver" vorgesehen sein.

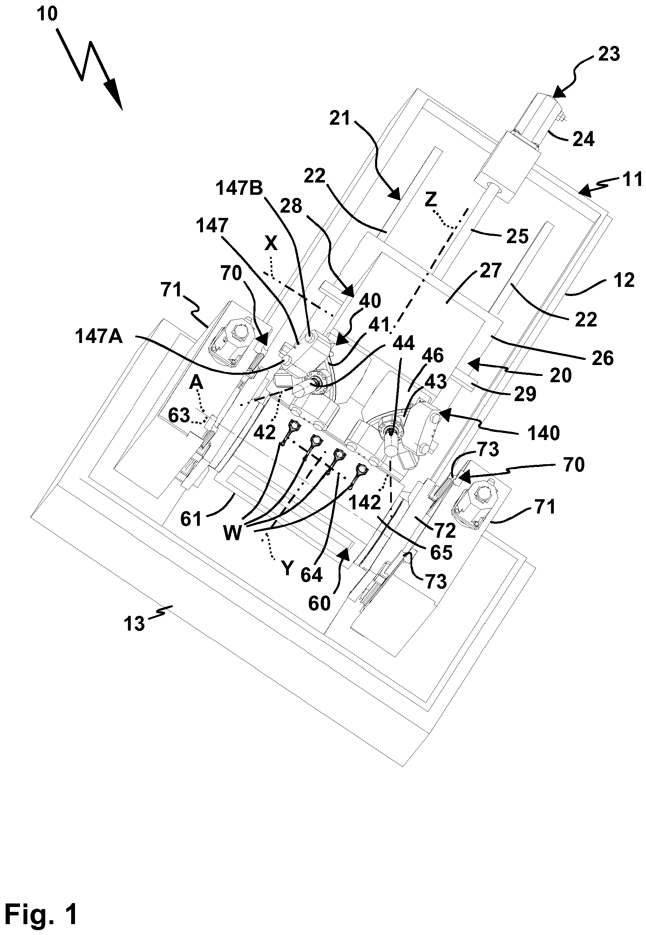

Somit ist es beispielsweise möglich, dass entsprechend dem Ausführungsbeispiel in Figur 1 und 2 zwei Bearbeitungswerkzeuge 44B und 44C gleichzeitig durch den Werkzeugantrieb 43 antreibbar sind, wenn die das Verteilergetriebe 149 mit dem Werkzeugantrieb 43 in der Bearbeitungsposition O gekoppelt ist.

## Patentansprüche

1. Werkzeugmaschine mit einem Werkstückträger (60) und mit einem Werkzeugschlitten (20), der anhand einer Linearführung (21) in einer insbesondere horizontalen Bearbeitungsachse (Z) zu dem Werkstückträger (60) hin und von diesem weg bewegbar gelagert ist, wobei an dem Werkzeugschlitten (20) mindestens ein Werkzeugrevolver (40, 140) mit mindestens zwei Bearbeitungswerkzeugen (44) zur Bearbeitung des mindestens einen Werkstücks (W) angeordnet ist, wobei der mindestens eine Werkzeugrevolver (40, 140) einen um eine Revolverachse (42, 142) drehbaren Werkzeugträger (41) zur Positionierung jeweils eines Bearbeitungswerkzeugs (44) in eine Bearbeitungsposition (O) und einen Werkzeugantrieb (43) zum Dreh-Antreiben des in der Bearbeitungsposition (O) befindlichen Bearbeitungswerkzeugs (44) aufweist, und wobei der Werkstückträger (60) an einer Werkstückträger-Linearführung (70) entlang einer insbesondere vertikalen Stellachse (Y) quer zu der Bearbeitungsachse (Z) des Werkzeugschlittens (20) zur Positionierung des mindestens einen zu bearbeitenden Werkstücks (W) relativ zu dem in der Bearbeitungsposition (O) befindlichen Bearbeitungswerkzeug (44) linear beweglich gelagert ist, **dadurch gekennzeichnet, dass** die Revolverachse (42, 142) des mindestens einen Werkzeugrevolvers (40, 140) schräg zu der Bearbeitungsachse (Z) der Linearführung (21) für den Werkzeugschlitten (20) verläuft.

2. Werkzeugmaschine nach Anspruch 1, **dadurch gekennzeichnet, dass** der Werkzeugschlitten (20) an einer zweiten Linearführung (28) quer, insbesondere rechtwinkelig, zu der Bearbeitungsachse (Z) entlang einer insbesondere horizontalen Werkzeug-Stellachse (X) beweglich gelagert ist.

3. Werkzeugmaschine nach Anspruch 1 oder 2, **dadurch gekennzeichnet, dass** an dem Werkzeugschlitten (20) mindestens ein zweiter Werkzeugrevolver (40, 140) mit mindestens zwei Bearbeitungswerkzeugen (44) angeordnet ist, so dass anhand der Werkzeugrevolver (40, 140) jeweils mindestens zwei Bearbeitungswerkzeuge (44) in eine zur Bearbeitung des mindestens einen Werkstücks (W) vorgesehene Bearbeitungsposition (O) verstellbar sind, wobei vorteilhaft vorgesehen ist, dass die Revolverachsen (42, 142) der mindestens zwei Werkzeugrevolver (40, 140) zueinander winkelig, insbesondere rechtwinkelig, sind.

4. Werkzeugmaschine nach einem der vorhergehenden Ansprüche, **dadurch gekennzeichnet, dass** die in der Bearbeitungsposition (O) stehenden Bearbeitungswerkzeuge (44) in einer Reihenrichtung (63) nebeneinander angeordnet sind, wobei vorteilhaft vorgesehen ist, dass die Reihenrichtung (R) entlang einer horizontalen Achse verläuft.

5. Werkzeugmaschine nach einem der vorhergehenden Ansprüche, **dadurch gekennzeichnet, dass** an dem Werkstückträger (60) mindestens zwei in der Reihenrichtung (63) nebeneinander angeordnete Werkstückhalterungen (62) zum Halten von Werkstücken (W) vorhanden sind, wobei vorteilhaft vorgesehen ist, dass die Reihenrichtung (63) entlang einer horizontalen Achse verläuft.

6. Werkzeugmaschine nach einem der vorhergehenden Ansprüche, **dadurch gekennzeichnet, dass** der Werkstückträger (60) einen Werkstückbalken (61) umfasst, dessen Längsachse quer zu der Bearbeitungsachse (Z) verläuft.

7. Werkzeugmaschine nach einem der vorhergehenden Ansprüche, **dadurch gekennzeichnet, dass** der Werkstückträger (60) mindestens zwei voneinander separate Werkstückhaltebereiche (65) aufweist, die abwechselnd in einen zur Bearbeitung durch das mindestens eine in Bearbeitungspositionen (O) stehende Bearbeitungswerkzeug (44) vorgesehenen Bearbeitungsbereich (85) und eine für einen Werkstückwechsel vorgesehenen Werkstückwechselbereich (86) bewegbar sind.

8. Werkzeugmaschine nach einem der vorhergehenden Ansprüche, **dadurch gekennzeichnet, dass** der Werkstückträger (60) an seinen Längsendbereichen jeweils an einem Schlitten der Werkstückträger-Linearführung (70) gehalten ist.

9. Werkzeugmaschine nach einem der vorhergehenden Ansprüche, **dadurch gekennzeichnet, dass** der Werkstückträger (60) anhand einer Drehlageranordnung (76) um eine Positionier-Schwenkachse (A), insbesondere an der Werkstückträger-Linearführung (70), schwenkbar gelagert ist.

10. Werkzeugmaschine nach Anspruch 9, **dadurch gekennzeichnet, dass** die Positionier-Schwenkachse (A) quer, insbesondere rechtwinkelig, zu der Bearbeitungsachse (Z) des Werkzeugschlittens (20) ist und/oder dass die Drehlageranordnung (76) den Werkstückträger (60) an seinen jeweiligen Längsendbereichen mit jeweils einem Drehlager drehbar lagert.

11. Werkzeugmaschine nach einem der vorhergehenden Ansprüche, **dadurch gekennzeichnet, dass** die Revolverachse (42, 142) des mindestens einen Werkzeugrevolvers (40, 140) etwa 45° winkelig zu der Bearbeitungsachse (Z) der Linearführung (21) für den Werkzeugschlitten (20) verläuft.

12. Werkzeugmaschine nach einem der vorhergehenden Ansprüche, **dadurch gekennzeichnet, dass** sie mindestens zwei Werkzeugrevolver (40, 140) mit um jeweils eine Revolverachse (42, 142) drehbaren Werkzeugträgern (41) aufweist, wobei die in der jeweiligen Bearbeitungsposition (O) befindlichen Bearbeitungswerkzeuge (44) der Werkzeugrevolver (40, 140) in einer Reihenachse (R) nebeneinander angeordnet sind, wobei die Revolverachsen (42, 142) an einander entgegengesetzten Seiten der Reihenachse (R) oder einer die Reihenachse (R) aufweisenden Ebene angeordnet sind und/oder mindestens ein außerhalb der Bearbeitungspositionen (O) befindliches Bearbeitungswerkzeug (44) in einen Zwischenraum, insbesondere einen Zwischenraum bezüglich der Reihenachse (R), zwischen die in den Bearbeitungspositionen (O) befindlichen Bearbeitungswerkzeuge (44) bewegbar ist.

13. Werkzeugmaschine nach Anspruch 12, **dadurch gekennzeichnet, dass** zwischen Bewegungsbahnen (48, 148), die die Bearbeitungswerkzeuge (44) bei einer Drehung um die jeweilige Revolverachse (42, 142) durchlaufen, ein Abstand vorhanden ist oder einander überlappen.

14. Werkzeugmaschine nach einem der vorhergehenden Ansprüche, **dadurch gekennzeichnet, dass** sie mindestens zwei Werkzeugrevolver (40, 140) mit um jeweils eine Revolverachse (42, 142) drehbaren Werkzeugträgern (41) und eine Steuereinrichtung (80) zur Steuerung der Drehbewegung der Werkzeugrevolver (40, 140) aufweist derart, dass die Bearbeitungswerkzeuge (44) des einen Werkzeugrevolvers (40, 140) in Zwischenräume zwischen Bearbeitungswerkzeuge (44) des anderen Werkzeugrevolvers (40, 140) zahnartig eingreifen.

15. Werkzeugmaschine nach einem der vorhergehenden Ansprüche, **dadurch gekennzeichnet, dass** mindestens ein Werkzeugrevolver (40, 140) einen Werkzeugträger (41) mit mindestens zwei simultan mit dem Werkzeugantrieb (43) drehgekoppelten oder in Drehkoppelung bringbaren Werkzeugaufnahmen (47A, 47B), insbesondere einen Doppelspindelrevolver, aufweist.

## Claims

1. Machine tool with a workpiece carrier (60) and a tool carriage (20), which is mounted by means of a linear guide (21) for movement towards the workpiece carrier (60) and away therefrom in an in particular horizontal machining axis (Z), wherein at least one tool revolver (40, 140) with at least two machining tools (44) for machining the at least one workpiece (W) is located at the tool carriage (20), wherein the at least one tool revolver (40, 140) has a tool carrier (41) rotatable about a revolver axis (42, 142) for positioning one machining tool (44) each in a machining position (O) and a tool drive (43) for the rotary drive of the machining tool (44) situated in the machining position (O), and wherein the workpiece carrier (60) is mounted at a workpiece carrier linear guide (70) for linear movement relative to the machining tool (44) situated in the machining position (O) along an in particular vertical adjusting axis (Y) transversely to the machining axis (Z) of the tool carriage (20) for positioning the at least one workpiece (W) to be machined relative to the machining tool (44) situated in the machining position (O), **characterised in that** the revolver axis (42, 142) of the at least one tool revolver (40, 140) extends at an angle to the machining axis (Z) of the linear guide (21) for the tool carriage (20).

2. Machine tool according to claim 1, **characterised in that** the tool carriage (20) is mounted at a second linear guide (28) for movement transversely, in particular at right angles, to the machining axis (Z) along an in particular horizontal tool adjusting axis (X).

3. Machine tool according to claim 1 or 2, **characterised in that** at least one second tool revolver (40, 140) with at least two machining tools (44) is located at the tool carriage (20), so that at least two machining tools (44) each can be moved into a machining position (O) for machining the at least one workpiece (W) by means of the tool revolvers (40, 140), wherein it is advantageously provided that the revolver axis (42, 142) of the at least two tool revolvers (40, 140) are oriented at an angle, in particular a right angle, to each other.

4. Machine tool according to any of the preceding claims, **characterised in that** the machining tools (44) situated in the machining position (O) are arranged in a row direction (63) adjacent to one another, wherein it is advantageously provided that the row direction (R) extends along a horizontal axis.

5. Machine tool according to any of the preceding claims, **characterised in that** at least two workpiece holders (62) arranged in the row direction (63) adjacent to one another at the workpiece carrier (60) are provided for holding workpieces (W), wherein it is advantageously provided that the row direction (63) extends along a horizontal axis.

6. Machine tool according to any of the preceding claims, **characterised in that** the workpiece carrier (60) comprises a workpiece bar (61), the longitudinal axis of which extends transversely to the machining axis (Z).

7. Machine tool according to any of the preceding claims, **characterised in that** the workpiece carrier (60) has at least two workpiece holding regions (65), which are separate from each other and can be moved alternately into a machining region (85) provided for machining by the at least one machining tool (44) situated in machining positions (O) and a workpiece changing region (86) provided for a workpiece change.

8. Machine tool according to any of the preceding claims, **characterised in that** the workpiece carrier (60) is held at a carriage of the workpiece carrier linear guide (70) in each of its longitudinal end regions.

9. Machine tool according to any of the preceding claims, **characterised in that** the workpiece carrier (60) is mounted for pivoting about a positioning pivot axis (A), in particular at the workpiece carrier linear guide (70), by means of a rotary bearing assembly (76).

10. Machine tool according to claim 9, **characterised in that** the positioning pivot axis (A) extends transversely, in particular at right angles, to the machining axis (Z) of the tool carriage (20), and/or **in that** the rotary bearing assembly (76) holds the workpiece carrier (60) rotatably in its respective longitudinal end regions with a rotary bearing each.

11. Machine tool according to any of the preceding claims, **characterised in that** the revolver axis (42, 142) of the at least one tool revolver (40, 140) extends at an angle of approximately 45° to the machining axis (Z) of the linear guide (21) for the tool carriage (20).

12. Machine tool according to any of the preceding claims, **characterised in that** it has at least two tool revolvers (40, 140) with tool carriers (41) rotatable about a revolver axis (42, 142) each, wherein the machining tools (44) of the tool revolvers (40, 140), situated in the respective machining position (O), are arranged adjacent to one another in a row axis (R), wherein the revolver axes (42, 142) are located on opposite sides of the row axis (R) or in a plane having the row axis (R), and/or at least one machining tool (44) situated outside the machining position (O) can be moved into a space, in particular a space with respect to the row axis (R), between the machining tools (44) situated in the machining position (O).

13. Machine tool according to claim 12, **characterised in that**, between movements paths (48, 148) covered by the machining tools (44) when rotating about the respective revolver axis (42, 142), there is a distance or an overlap.

14. Machine tool according to any of the preceding claims, **characterised in that** it has at least two tool revolvers (40, 140) with tool carriers (41) rotatable about a revolver axis (42, 142) each and a control device (80) for controlling the rotary movement of the tool revolvers (40, 140) in such a way that the machining tools (44) of the one tool revolver (40, 140) engage in a tooth-like manner with spaces between machining tools (44) of the other tool revolver (40, 140).

15. Machine tool according to any of the preceding claims, **characterised in that** at least one tool revolver (40, 140) has a tool carrier (41) with at least two tool holding fixtures (47A, 47B), which are or can be coupled for rotation simultaneously to the tool drive (43), in particular a twin spindle revolver.

## Revendications

1. Machine-outil avec un porte-pièce (60) et avec un chariot d'outil (20), qui est monté de manière à pouvoir être déplacé en direction du porte-pièce (60) et de manière à s'en éloigner dans un axe d'usinage (Z) en particulier horizontal à l'aide d'un guidage linéaire (21), dans laquelle au moins une tourelle porte-outils (40, 140) avec au moins deux outils d'usinage (44) pour usiner l'au moins une pièce (W) est disposée sur le chariot d'outil (20), dans laquelle l'au moins une tourelle porte-outils (40, 140) présente un porte-outil (41) pouvant tourner autour d'un axe de tourelle (41, 142) pour positionner respectivement un outil d'usinage (44) dans une position d'usinage (O) et un entraînement d'outil (43) pour entraîner en rotation l'outil d'usinage (44) se trouvant dans la position d'usinage (O), et dans laquelle le porte-pièce (60) est monté de manière mobile linéairement sur un guidage linéaire de porte-pièce (70) le long d'un axe de réglage (Y) en particulier vertical de manière transversale par rapport à l'axe d'usinage (Z) du chariot d'outil (20) pour positionner l'au moins une pièce (W) à usiner par rapport à l'outil d'usinage (44) se trouvant dans la position d'usinage (O), **caractérisée en ce que** l'axe de tourelle (42, 142) de l'au moins une tourelle porte-outils (40, 140) s'étend à l'oblique par rapport à l'axe d'usinage (Z) du guidage linéaire (21) pour le chariot d'outil (20).

2. Machine-outil selon la revendication 1, **caractérisée en ce que** le chariot d'outil (20) est monté de manière mobile sur un deuxième guidage linéaire (28) de manière transversale, en particulier à angle droit, par rapport à l'axe d'usinage (Z) le long d'un axe de réglage d'outil (X) en particulier horizontal.

3. Machine-outil selon la revendication 1 ou 2, **caractérisée en ce qu'**au moins une deuxième tourelle porte-outils (40, 140) avec au moins deux outils d'usinage (44) est disposée sur le chariot d'outil (20) de telle sorte que respectivement au moins deux outils d'usinage (44) peuvent être ajustés dans une position d'usinage (O) prévue pour usiner l'au moins une pièce (W) à l'aide de la tourelle porte-outils (40, 140), dans laquelle il est prévu avantageusement que les axes de tourelle (42, 142) des au moins deux tourelles porte-outils (40, 140) sont angulaires les uns par rapport aux autres, en particulier sont à angles droits.

4. Machine-outil selon l'une quelconque des revendications précédentes, **caractérisée en ce que** les outils d'usinage (44) se trouvant dans la position d'usinage (O) sont disposés côte à côte dans une direction d'alignement (63), dans laquelle il est avantageusement prévu que la direction d'alignement (R) s'étend le long d'un axe horizontal.

5. Machine-outil selon l'une quelconque des revendications précédentes, **caractérisée en ce qu'**au moins deux fixations de pièce (62) disposées côte à côte dans la direction d'alignement (63) sont présentes pour maintenir des pièces (W) sur le porte-pièces (60), dans laquelle il est avantageusement prévu que la direction d'alignement (63) s'étend le long d'un axe horizontal.

6. Machine-outil selon l'une quelconque des revendications précédentes, **caractérisée en ce que** le porte-pièces (60) comprend une poutre porte-pièces (61), dont l'axe longitudinal s'étend de manière transversale par rapport à l'axe d'usinage (Z).

7. Machine-outil selon l'une quelconque des revendications précédentes, **caractérisée en ce que** le porte-pièces (60) présente au moins deux zones de maintien de pièce (65) séparées l'une de l'autre, qui peuvent être déplacées en alternance dans une zone d'usinage (85) prévue pour l'usinage par l'au moins un outil d'usinage (44) se trouvant dans des positions d'usinage (O) et dans une zone de changement de pièce (86) prévue pour un changement de pièce.

8. Machine-outil selon l'une quelconque des revendications précédentes, **caractérisée en ce que** le porte-pièces (60) est maintenu sur ses zones d'extrémité longitudinale respectivement sur un chariot du guidage linéaire de porte-pièces (70).

9. Machine-outil selon l'une quelconque des revendications précédentes, **caractérisée en ce que** le porte-pièces (60) est monté de manière à pouvoir pivoter, à l'aide d'un ensemble formant palier rotatif (76), autour d'un axe de pivotement de positionnement (A), en particulier sur le guidage linéaire de porte-pièces (70).

10. Machine-outil selon la revendication 9, **caractérisée en ce que** l'axe de pivotement de positionnement (A) est transversal, en particulier est à angle droit, par rapport à l'axe d'usinage (Z) du chariot d'outil (20), et/ou que l'ensemble formant palier rotatif (76) supporte de manière rotative le porte-pièces (60) sur ses zones d'extrémité longitudinales respectives avec respectivement un palier rotatif.

11. Machine-outil selon l'une quelconque des revendications précédentes, **caractérisée en ce que** l'axe de tourelle (42, 142) de l'au moins une tourelle porte-outils (40, 140) s'étend selon un angle d'environ 45° par rapport à l'axe d'usinage (Z) du guidage linéaire (21) pour le chariot d'outil (20).

12. Machine-outil selon l'une quelconque des revendications précédentes, **caractérisée en ce qu'**elle présente au moins deux tourelles porte-outils (40, 140) avec des porte-outils (41) pouvant tourner autour de respectivement un axe de tourelle (42, 142), dans laquelle les outils d'usinage (44), se trouvant dans la position d'usinage (O) respective, des tourelles porte-outils (40, 140) sont disposés côte à côte dans un axe d'alignement (R), dans laquelle les axes de tourelle (42, 142) sont disposés sur des côtés opposés de l'axe d'alignement (R) ou d'un plan présentant l'axe d'alignement (R) et/ou au moins un outil d'usinage (44) se trouvant à l'extérieur des positions d'usinage (O) peut être déplacé dans un espace intermédiaire, en particulier un espace intermédiaire par rapport à l'axe d'alignement (R) entre les outils d'usinage (44) se trouvant dans les positons d'usinage (O).

13. Machine-outil selon la revendication 12, **caractérisée en ce que** les outils d'usinage (44) passent entre des trajectoires de déplacement (48, 148) lors d'une rotation autour de l'axe de tourelle (42, 142) respectif, une distance est présente, ou ils se chevauchent les uns les autres.

14. Machine-outil selon l'une quelconque des revendications précédentes, **caractérisée en ce qu'**elle présente au moins deux tourelles porte-outils (40, 140) avec des porte-outils (41) pouvant tourner autour de respectivement un axe de tourelle (42, 142) et un dispositif de commande (80) pour commander le déplacement en rotation des tourelles porte-outils (40, 140) de telle manière que les outils d'usinage (44) d'une tourelle porte-outils (40, 140) viennent en prise à la manière de dents avec des espaces intermédiaires entre des outils d'usinage (44) de l'autre tourelle porte-outils (40, 140).

15. Machine-outil selon l'une quelconque des revendications précédentes, **caractérisée en ce qu'**au moins une tourelle porte-outils (40, 140) présente un porte-outils (41) avec au moins deux logements d'outil (47A, 47B) couplés en rotation ou pouvant être amenés en couplage par rotation simultanément avec l'entraînement d'outil (43), en particulier une tourelle à double broche.
